# EUROPÄISCHE PATENTSCHRIFT

(11) **EP 1 213 494 B1**
(45) Veröffentlichungstag und Bekanntmachung des Hinweises auf die Patenterteilung: **17.08.2011**
(21) Anmeldenummer: 01128872.7
(22) Anmeldetag: 05.12.2001
(51) Int. Cl.: F16B 19/14

(54) **Befestigungselement**
Fastening element
Elément de fixation

(30) Priorität: 05.12.2000 DE 10060279
(43) Veröffentlichungstag der Anmeldung: 12.06.2002
(73) Patentinhaber: Arnold Umformtechnik GmbH & Co. KG, 74670 Forchtenberg-Ernsbach (DE)
(72) Erfinder: Weidner, Bernd, 74653 Ingelfingen-Criesbach (DE)
(74) Vertreter: Patentanwälte Ruff, Wilhelm, Beier, Dauster & Partner

(56) Entgegenhaltungen:
- EP-A2- 0 887 562
- GB-A- 1 207 235
- DATABASE WPI Week 199707 Derwent Publications Ltd., London, GB; AN 1997-076020 XP002191424 & RU 2 060 406 C (AS SIBE THEORET APPL MECHANICS INST), 20. Mai 1996 (1996-05-20)

## Beschreibung

Die Erfindung geht aus von einem Befestigungselement, das insbesondere mit Hilfe von Bolzenschubgeräten angebracht wird. Derartige Befestigungselemente werden auch als Bolzen oder Nägel bezeichnet.

Die bekannten Bolzen bzw. Nägel haben einen zylindrischen Schaftabschnitt, der zum Einsetzen in den Untergrund bestimmt ist. Dieser zylindrische Schaftabschnitt weist einen kreisrunden Querschnitt auf. Als Untergrund kommt Beton, Mauerwerk, Holz, Stahl, Aluminium und andere metallische und nicht metallische Werkstoffe in Frage. Bei manchen Befestigungselementen dieser Art kann der Einsetzabschnitt auch eine Rändelung aufweisen.

Es sind ebenfalls Befestigungselemente dieser Art bekannt, bei denen sich an den Einsetzabschnitt ein Gewindeabschnitt anschließt, auf den dann ein Gegenstand aufgeschraubt werden kann.

Es ist bereits ein Befestigungselement gemäß dem Oberbegriff des Anspruchs 1 mit einem kreisrunden Schaft bekannt gemäß der GB 1207235A, an den sich eine sich verjüngenden Spitze mit einem unrunden Vertiefungen aufweisenden Querschnitt anschließt.

Weiterhin bekannt ist ein Befestigungselement gemäß der RU 2060406C, das einen geriefelten im Querschnitt konstanten Schaft und eine Spitze aufweist, die im Querschnitt kreuzförmig ausgebildet ist.

Bei einem nochmals weiteren Befestigungselement gemäß der EP 887562A ist ein über die gesamte Länge des Befestigungselements etwa rechteckiger Querschnitt vorhanden. Dieses Befestigungselement wird durch Stanzen und Abscheren aus einem massiven Material hergestellt, dessen Breite der Länge des Befestigungselements entspricht.

Der Erfindung liegt die Aufgabe zu Grunde, ein Befestigungselement zu schaffen, das sich besser verankern lässt und höhere Auszugswerte und Torsionswerte aufweist.

Zur Lösung dieser Aufgabe schlägt die Erfindung ein Befestigungselement mit den im Anspruch 1 genannten Merkmalen vor. Weiterbildungen der Erfindung sind Gegenstand von Unteransprüchen, deren Wortlaut ebenso wie der Wortlaut der Zusammenfassung durch Bezugnahme zum Inhalt der Beschreibung gemacht wird.

Erfindungsgemäß weist also der Schaft mindestens in dem Teil, mit dem er in den Untergrund eingesetzt wird, einen von einem kreisrunden Querschnitt abweichenden polygonalen Querschnitt mit drei abgerundeten Ecken auf. Erfindungsgemäß ist vorgesehen, dass die die abgerundeten Ecken verbindenden Seiten des Querschnitts konvex ausgebildet sind, so dass die Querschnittsform an mehreren Stellen von der Kreisform nach innen mehr oder weniger weit abweicht.

Da durch die Abweichung des Querschnitts von einer Kreisform nach innen weniger Material vorhanden ist, lässt sich das Befestigungselement mit geringerer Einschubkraft einbringen. Dies wird noch dadurch verstärkt, dass wegen der Polygonform die Materialverdrängung nicht gleichmäßig radial verteilt ist.

Das Material des Befestigungsuntergrunds verteilt sich wegen der angenäherten Mehreckform stärker im Bereich des hergestellten Lochs. Dadurch werden auch höhere Auszugskräfte erreicht.

Auch das Widerstandsmoment gegenüber einer Drehung wird vergrößert.

Wegen der geringeren Materialverdrängung tritt auch eine geringere Wulstbildung auf, so dass sich bessere Befestigungsmöglichkeiten ergeben.

Durch die Mehreckform entsteht wegen der Kraftaufnahme an den Flanken eine geringere Spaltwirkung.

Wegen der gesteigerten Haltekräfte entsteht eine höhere Montagesicherheit, und es lassen sich härtere Materialien verwenden. Für den Monteur entsteht der Vorteil, dass eine geringere körperliche Belastung auftritt, da weniger Kraft zum Einbringen benötigt wird.

Bei der Anbringung in Beton ist die Gefahr des Abplatzens geringer.

Erfindungsgemäß kann das Befestigungselement so ausgebildet sein, dass das vordere Ende des Eindringabschnitts spitz ausgebildet ist. Es ist jedoch in Abhängigkeit von den Anwendungsfällen auch möglich, dass das vordere Ende des Eindringabschnitts stumpf ist, nämlich dann, wenn in ein vorgebohrtes Loch ein Bolzen gesetzt wird. Dann kann eine stumpfe Kuppe ausreichen.

Die Spitze kann unterschiedlich ausgeführt sein, beispielsweise konisch balistisch, wobei der Querschnitt der Spitze rund oder mit Vorteil auch der Polygonform des Schafts entspricht.

Zur Begrenzung des Eindringens und/oder zur Festlegung von zu befestigenden Gegenständen kann erfindungsgemäß der Befestigungabschnitt einen verbreiterten Flansch aufweisen. Dieser verbreiterte Flansch kann beispielsweise durch einen Kopf gebildet sein, so dass sich die Form eines üblichen Nagels bzw. Bolzens ergibt.

Wenn an dem Befestigungselement ein weiteres Element angeschraubt werden soll, so kann erfindungsgemäß vorgesehen sein, dass der Befestigungabschnitt einen Abschnitt mit einem Gewinde aufweist.

Erfindungsgemäß kann das Befestigungselemente durch Walzen hergestellt werden, wobei als Ausgangsmaterial ein Draht mit einem polygonalen Querschnitt verwendet werden kann. Es kann auch eine durch Umformen (Pressen) hergestellte Polygonform sein. Das Herstellverfahren für die Spitze ist das Walzen für die Polygonform. Der Schaft kann zylindrisch oder auch konisch verlaufen.

Das von der Erfindung vorgeschlagene Befestigungselement kann in Weiterbildung insbesondere für die Bolzenschubtechnik ausgebildet sein, so dass es mit den üblichen Bolzenschubgeräten verwendet werden kann. Es ist ebenfalls möglich, das Befestigungselement als einen Handeinschlagbolzen auszubilden, so dass es mit Hammer oder Setzeisen gesetzt werden kann.

Weitere Merkmale, Einzelheiten und Vorzüge der Erfindung ergeben sich aus der folgenden Beschreibung bevorzugter Ausführungsformen sowie anhand der Zeichnung. Hierbei zeigen:
- Fig. 1: eine Seitenansicht eines von der Erfindung vorgeschlagenen Befestigungselementes bei einer ersten Ausführungsform;
- Fig. 2: eine Seitenansicht eines Befestigungselementes nach einer zweiten Ausführungsform;
- Fig. 3: eine Seitenansicht einer dritten Ausführungsform;
- Fig. 4: in vergrößertem Maßstab einen Querschnitt durch den Schaft eines Befestigungselements nach der Erfindung.

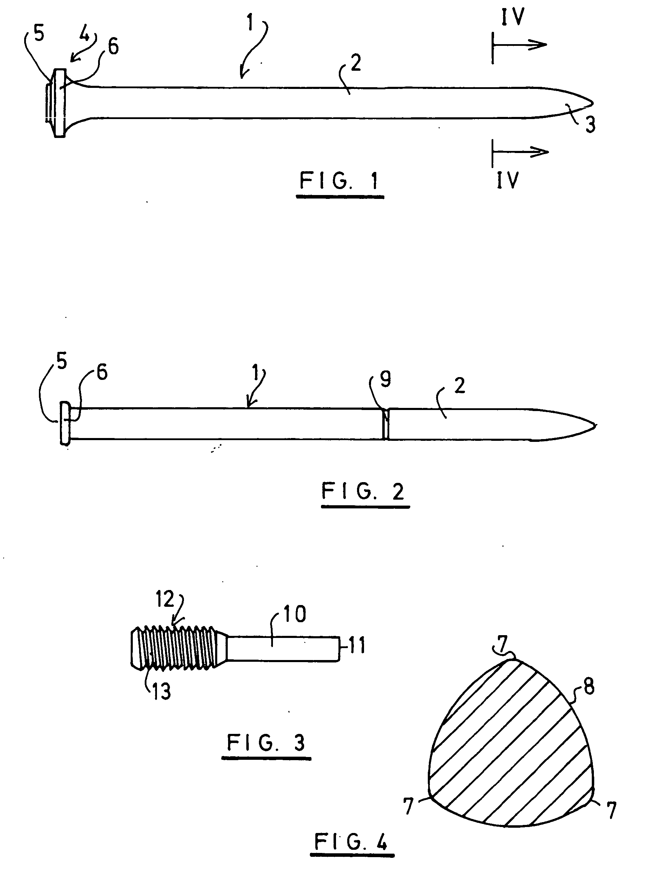

Fig. 1 zeigt in einer Seitenansicht ein als Befestigungsbolzen ausgebildetes Befestigungselement. Es enthält einen Schaft 1, der über den größten Teil seiner Länge als Eindringabschnitt 2 ausgebildet ist. Das in Fig. 1 rechte vordere Ende 3 des Schafts ist als Spitze ausgebildet, um das Eindringen beispielsweise in Beton zu erleichtern. An dem gegenüberliegenden Ende ist ein Befestigungabschnitt 4 ausgebildet, der im dargestellten Beispiel durch einen Kopf 5 mit einem verbreiterten Flansch 6 gebildet ist. Dieser verbreiterte Flansch dient dazu, einen mit einem Loch versehenen Gegenstand gegen den Untergrund zu pressen.

Der Querschnitt des Eindringabschnitts 2 des in Fig. 1 dargestellten Befestigungselements geht aus Fig. 4 hervor, auf die jetzt Bezug genommen wird. Der Querschnitt entspricht einem Dreieck mit abgerundeten Ecken 7, die durch konvex verlaufende Bögen 8 miteinander verbunden sind. Diese konvex verlaufenden Bögen 8 weichen von einem durch die Ecken 7 verlaufenden Kreis nach innen ab. Der Querschnitt ist also etwas kleiner als ein umbeschriebener Kreis.

Fig. 2 zeigt eine der Fig. 1 entsprechende Seitenansicht bei einer zweiten Ausführungsformen, wobei das Befestigungselement der Fig. 2 ein Schalungsnagel ist. Er enthält wieder einen Schaft 1 mit einem Eindringabschnitt 2, der von dem Rest des Schafts durch eine Nut 9 getrennt ist. Der Kopf ist etwas einfacher ausgebildet und enthält nur einen Flansch 6. Ein Schalungsnagel dieser Art wird dazu verwendet, ein Schalungsbrett an einer Betonfläche zu befestigen. Nach Fertigstellung der Schalung wird der Abschnitt zwischen dem Kopf 5 und der Nut 9 abgehebelt.

Fig. 3 zeigt eine dritte Ausführungsformen eines Befestigungselements, in diesen Fall einen Bolzen für Stahl. Dieser Bolzen weist in seinem Eindringabschnitt 10 ebenfalls eine zylindrische Form mit einem der Figur 4 entsprechenden Querschnitt auf. Das vordere Ende 11 des Eindringabschnitts 10 ist jedoch nicht als Spitze ausgebildet, sondern stumpf. Diese stumpfe Form des Eindringabschnitts 10 dient dazu, einen Bolzen in eine vorhandene Bohrung einzusetzen. Für das Einschieben im Stahl ohne eine vorhandene Bohrung wird dieses Teil mit einer Spitze hergestellt.

Der Polygonschaft kann mit einem Rändel oder einem Gewinde mit großer Steigung versehen sein, um die Auszugs- und Torsionswerte zu verbessern.

Der Befestigungsabschnitt 12 weist bei dieser Ausführungsformen eine größere Länge und einen größeren Durchmesser auf als bei den vorhergehenden Ausführungsformen. Der Befestigungsabschnitt 12 ist mit einem Gewinde 13 versehen, auf das nach Anbringung des Befestigungselements ein Gegenstand aufgeschraubt werden kann.

## Patentansprüche

1. Befestigungselement, mit
1.1 einem Schaft (1), der
1.1.1 einen zylindrischen und/oder konischen Eindringabschnitt (2) und
1.1.2 ein vorderes Ende (3) aufweist, sowie mit
1.2 einem Befestigungsabschnitt (4), der
1.2.1 an dem dem vorderen Ende (3) abgewandten Ende des Schafts (1) ausgebildet ist,
**dadurch gekennzeichnet, dass**
1.3 der Eindringabschnitt (2) einen abgerundet polygonalen Querschnitt mit drei abgerundeten Ecken (7) und konvexen die drei abgerundeten Echen (7) verbindenden Seiten (8) aufweist und
1.4 das Befestigungselement aus Draht mit diesem polygonalen Querschnitt oder einem polygonalen Pressrohling durch Walzen hergestellt ist.

2. Befestigungselement nach Anspruch 1, bei dem das vordere Ende (3) des Eindringabschnitts (2) spitz ausgebildet ist.

3. Befestigungselement nach Anspruch 1 oder 2, bei dem die Spitze einen kreisrunden oder abgerundet polygonalen Querschnitt aufweist.

4. Befestigungselement nach Anspruch 1, bei dem das vordere Ende (11) des Eindringabschnitts (10) stumpf ausgebildet ist.

5. Befestigungselement nach einem der vorhergehenden Ansprüche, bei dem der Befestigungsabschnitt (4) einen verbreiterten Flansch (6) aufweist.

6. Befestigungselement nach einem der vorhergehenden Ansprüche, bei dem der Befestigungsabschnitt (4) durch einen Kopf (5) gebildet ist.

7. Befestigungselement nach einem der Ansprüche 1 bis 4, bei dem der Befestigungsabschnitt (12) einen Abschnitt mit einem Gewinde (13) aufweist.

8. Befestigungselement nach einem der vorhergehenden Ansprüche, bei dem der Eindringabschnitt eine Rändelung oder gewindeähnliche Ausbildung aufweist.

9. Befestigungselement nach einem der vorhergehenden Ansprüche, mit einer Rändelung oder gewindeähnlichen Ausprägung im Übergang zur Spitze.

10. Befestigungselement nach einem der vorhergehenden Ansprüche, als Bolzen für die Bolzenschubtechnik ausgebildet.

11. Befestigungselement nach einem der Ansprüche 1 bis 9, als Bolzen zur Handmontage ausgebildet.

## Claims

1. Fastening element with
1.1 a shank (1) having
1.1.1 a cylindrical and/or conical penetrating section (2) and
1.1.2 a front end (3), and with
1.2 a fastening section (4) provided
1.2.1 at that end of the shank (1) facing away from the front end (3), **characterized in that**
1.3 the penetrating section (2) has a rounded-polygonal cross-section with three rounded corners (7) and convex sides (8) connecting said three rounded corners (7) and
1.4 the fastening element is made from wire having this polygonal cross-section or from a polygonal press blank by rolling.

2. Fastening element according to Claim 1, where the front end (3) of the penetrating section (2) is designed pointed.

3. Fastening element according to Claim 1 or Claim 2, where the point has a circular or rounded-polygonal cross-section.

4. Fastening element according to Claim 1, where the front end (11) of the penetrating section (10) is designed blunt.

5. Fastening element according to one of the preceding claims, where the fastening section (4) has a widened flange (6).

6. Fastening element according to one of the preceding claims, where the fastening section (4) is formed by a head (5).

7. Fastening element according to one of Claims 1 to 4, where the fastening section (12) has a section with a thread (13).

8. Fastening element according to one of the preceding claims, where the penetrating section has a knurled or thread-like form.

9. Fastening element according to one of the preceding claims, with a knurled or thread-like form in the transition to the point.

10. Fastening element according to one of the preceding claims, designed as a bolt for the bolt driving technique.

11. Fastening element according to one of Claims 1 to 9, designed as a bolt for manual fitting.

## Revendications

1. Élément de fixation, avec
1.1 une tige (1) qui présente
1.1.1 une section pénétrante (2) cylindrique et/ou conique et
1.1.2 une extrémité avant (3), ainsi qu'avec
1.2 une section de fixation (4), qui est formée
1.2.1 sur l'extrémité de la tige (1) opposée à l'extrémité avant (3),
**caractérisé en ce que**
1.3 la section pénétrante (2) présente une coupe transversale polygonale arrondie avec trois angles arrondis (7) et des côtés convexes (8) reliant les trois angles arrondis (7), et
1.4 l'élément de fixation est fabriqué par laminage à partir d'un fil métallique avec cette coupe transversale polygonale ou d'une pièce brute pressée polygonale.

2. Élément de fixation selon la revendication 1, dans lequel l'extrémité avant (3) de la section pénétrante (2) est conçue en forme de pointe.

3. Élément de fixation selon la revendication 1 ou 2, dans lequel la pointe présente une coupe transversale circulaire ou polygonale arrondie.

4. Élément de fixation selon la revendication 1, dans lequel l'extrémité avant (11) de la section pénétrante (10) est conçue sous forme tronquée.

5. Élément de fixation selon l'une des revendications précédentes, dans lequel la section de fixation (4) présente une bride élargie (6).

6. Élément de fixation selon l'une des revendications précédentes, dans lequel la section de fixation (4) est formée par une tête (5).

7. Élément de fixation selon l'une des revendications 1 à 4, dans lequel la section de fixation (12) présente une section filetée (13).

8. Élément de fixation selon l'une des revendications précédentes, dans lequel la section pénétrante présente un moletage ou un relief similaire à un filet.

9. Élément de fixation selon l'une des revendications précédentes, avec un moletage ou un relief similaire à un filet dans la zone de transition vers la pointe.

10. Élément de fixation selon l'une des revendications précédentes, conçu sous forme de goujon pour la technique de fixation au pistolet.

11. Élément de fixation selon l'une des revendications 1 à 9, conçu sous forme de goujon pour le montage manuel.
